# EUROPÄISCHE PATENTSCHRIFT

(11) **EP 1 321 182 B1**
(45) Veröffentlichungstag und Bekanntmachung des Hinweises auf die Patenterteilung: **16.05.2007**
(21) Anmeldenummer: 02025472.8
(22) Anmeldetag: 15.11.2002
(51) Int. Cl.: B01J 13/18, E04C 2/04

(54) **Mikrokapseln**
Microcapsules
Microcapsules

(30) Priorität: 20.12.2001 DE 10163162
(43) Veröffentlichungstag der Anmeldung: 25.06.2003
(73) Patentinhaber: BASF Aktiengesellschaft, 67056 Ludwigshafen (DE)
(72) Erfinder: Jahns, Ekkehard, Dr., 69469 Weinheim (DE); Denu, Hans-Jürgen, 67159 Friedelsheim (DE); Pakusch, Joachim, Dr., 67346 Speyer (DE); Seibert, Horst, 67136 Fussgönheim (DE)

(56) Entgegenhaltungen:
- EP-A- 0 457 154
- WO-A-99/24525
- DE-A- 10 000 223
- DE-A- 19 959 806
- US-A- 4 421 660

## Beschreibung

Die vorliegende Erfindung betrifft Mikrokapseln umfassend eine oder mehrere lipophile Substanzen als Kernmaterial und ein Polymer als Kapselschale, die erhältlich sind durch radikalische Polymerisation einer Öl-in-Wasser-Emulsion enthaltend
- 30 bis 100 Gew.-%, bezogen auf das Gesamtgewicht der Monomeren, eines oder mehrerer C₁-C₂₄-Alkylester der Acryl- und/oder Methacrylsäure (Monomer I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III)
die lipophile Substanz und anorganische feste Teilchen einer mittleren Teilchengröße von 45 bis 1000 nm, ein Verfahren zu ihrer Herstellung sowie ihre Verwendung in Bindebaustoffen, Textilien und Gipskartonplatten.

Mikrokapseln mit einer Kapselhülle, die durch radikalische Polymerisation hergestellt werden, kennt man in den verschiedensten Einsatzgebieten. So verwendet man sie je nach Durchlässigkeit der Kapselwand bei Arzneimittel oder Pflanzenschutzmitteln zur Verkapselung von Wirkstoffen, in kohlefreien Durchschreibepapieren oder als Wärmespeichermedium. Während bei Wirkstoffen eine gewisse Durchlässigkeit erwünscht ist, die eine kontrollierte Abgabe des Wirkstoffs ermöglicht, sind für die Anwendung als Durchschreibepapier und Wärmespeichermedium dichte Kapselwände erforderlich. Da die Wanddicke in der Regel mit der Kapselgröße einhergeht, sind die kleinsten Kapseln einer Verteilung oftmals unerwünscht. Eine weitere Anforderung an das Herstellverfahren ist die Herstellung einer engen Kapselgrößenverteilung.

Die EP-A-463 926 lehrt die Verwendung von feinteiligem Mineralpulver für die Herstellung von Mikrokapseln aus Aminoplastharzen.

Die EP-A-539 142 beschreibt die Herstellung von Mikrokapseln aus sowohl Aminoplastharzen wie auch Polyharnstoffen unter Verwendung von kolloidalen anorganischen Teilchen mit einer mittleren Teilchengröße < 30 nm zur Stabilisierung der Öl-in-Wasser-Emulsion.

Gemäß dieser Schrift führt eine Teilchengröße von 100 nm zu einer unerwünscht breiten Kapselgrößenverteilung, wie der Tabelle 1 zu entnehmen ist.

Die US 3 615 972 beschreibt ein Verfahren zur Herstellung von aufschäumbaren Mikrokapseln aus Methylmethacrylat als Kapselwand und Neopentan als Kapselkern unter Verwendung von anorganischen festen Teilchen. Zum Stabilisieren der Emulsion wird "Ludox® HS" eingesetzt, was eine kolloidale Kieselsäuredispersion ist, deren mittlere Teilchengröße 12 nm beträgt.

Die WO 99/24525 lehrt die Herstellung von mikroverkapselten Latentwärmespeicherölen- und/oder Wachsen mit Kapselwänden auf der Basis von Polymethylmethacrylat unter Verwendung einer kolloidalen Kieselsäuredispersion mit einer mittleren Teilchengröße von 12 nm der Siliciumdioxidpartikel. Die resultierenden mikroverkapselten Latentwärmespeicher sind vorteilhaft für die Verwendung in mineralischen Formkörpern und Beschichtungsmassen.

Die ältere deutsche Anmeldung 10 139 171.4 lehrt ferner die Verwendung solch mikroverkapselter Latentwärmespeicher in Gipskartonplatten.

Es hat sich gezeigt, dass bei der Herstellung von Mikrokapseln auf Basis von Alkylestern der Acryl- und/oder Methacrylsäure und der Verwendung von Kieselsäuredispersionen mit einer mittleren Teilchengröße des Siliciumdioxids von 12 nm der Anteil der Mikrokapseln mit einem Durchmesser ≤ 4 µm um die 10 % beträgt. Daher lag der vorliegenden Erfindung die Bereitstellung von Mikrokapseldispersionen mit einem gesenkten Anteil an Mikrokapseln, deren Durchmesser ≤ 4 µm beträgt, als Aufgabe zugrunde. Ferner sollten die entstehenden Mikrokapseldispersionen eine enge Kapselgrößenverteilung aufweisen. Die Kapseln sollen insbesondere für ihre Verwendung in Gipskartonplatten und mineralischen Formkörpern und Beschichtungsmassen eine hohe Dichtigkeit und gute Wärmespeichereigenschaften aufweisen.

Demgemäß wurden die obengenannten Mikrokapseln, ein Verfahren zu ihrer Herstellung sowie ihre Verwendung in Gipskartonplatten, mineralischen Formkörpern sowie mineralischen Beschichtungsmassen gefunden.

Die erfindungsgemäßen Mikrokapseln lassen sich durch eine sogenannte in-situ-Polymerisation herstellen. Der Kapselkern wird von der in Wasser emulgierbaren lipophilen Substanz gebildet. Die lipophile Substanz dient gleichzeitig als Lösungs- oder Dispergiermittel für die Monomere, aus denen sich die Kapselwand bildet.

Zuerst wird aus Monomeren, lipophiler Substanz und den anorganischen festen Teilchen eine stabile Öl-in-Wasser-Emulsion hergestellt, in der im wesentlichen die lipophile Substanz und Monomere die disperse Phase bilden. Die Polymerisation findet dann in der Ölphase der stabilen Öl-in-Wasser-Emulsion statt. Sie wird durch Erwärmen der Emulsion ausgelöst. Während die Monomere im Wesentlichen in der Ölphase löslich sind, werden die entstehenden Oligo- und Polymere unlöslich und wandern an die Grenzfläche aus Öl- und Wasserphase. Dort bilden sie im Verlauf der weiteren Polymerisation das Wandmaterial, welches schließlich die lipophile Substanz umschließt.

Die anorganischen festen Teilchen wirken dabei wie Schutzkolloide. Sie ermöglichen eine Stabilisierung durch feine feste Partikel. Die Teilchen bleiben unter den Reaktionsbedingungen fest. Sie sind in Wasser unlöslich, aber dispergierbar oder in Wasser weder löslich noch dispergierbar jedoch von der lipophilen Substanz benetzbar. Diese anorganischen festen Teilchen befinden sich bevorzugt an der Grenzfläche zwischen Öl- und Wasserphase. Die erfindungsgemäßen Mikrokapseln weisen einen Belag an anorganischen festen Teilchen auf, die auch teilweise in die Wand eingebaut sein können. Aufgrund ihrer Wirkungsweise werden die anorganischen festen Teilchen auch als Pickering-Systeme bezeichnet (s. auch US 3 615 972 und US 4 016 110).

Ein Pickering-System kann dabei aus den anorganischen festen Teilchen allein oder zusätzlich aus Hilfsstoffen bestehen, die die Dispergierbarkeit der Partikel in Wasser oder die Benetzbarkeit der Partikel durch die lipophile Phase verbessern. Diese Hilfsmittel sind z.B. nichtionische, anionische, kationische oder zwitterionische Tenside oder polymere Schutzkolloide, wie sie unten beschrieben sind. Zusätzlich können Puffersubstanzen zugefügt werden, um bestimmte, jeweils vorteilhafte pH-Werte der Wasserphase einzustellen. Dies kann die Wasserlöslichkeit der feinen Partikel verringern und die Stabilität der Emulsion erhöhen. Übliche Pufferstubstanzen sind Phosphatpuffer, Acetatpuffer und Citratpuffer.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Bevorzugt werden anorganische feste Teilchen einer mittleren Größe von 45 bis 500 nm, insbesondere 45 bis 200 nm. Die untere mittlere Teilchengrößengrenze ist bevorzugt 50 insbesondere 60 nm. Die Größenangaben beziehen sich auf das Z-Mittel der eingesetzten Kolloiddispersion bestimmt mittels Lichtstreuung.

Die Pickering-Systeme können sowohl zuerst in die Wasserphase gegeben werden, als auch zu der Mischung aus Öl- und Wasserphase zugegeben werden. Manche anorganischen festen Partikel werden durch eine Fällung hergestellt. So wird das Magnesiumpyrophosphat durch Zusammengeben der wässrigen Lösungen von Natriumpyrophosphat und Magnesiumsulfat hergestellt.

In der Regel wird das Pyrophosphat unmittelbar vor der Dispergierung durch Vereinigen einer wässrigen Lösung eines Alkalipyrophosphats mit mindestens der stöchiometrisch erforderlichen Menge eines Magnesiumsalzes hergestellt, wobei das Magnesiumsalz in fester Form oder wässriger Lösung vorliegen kann. In einer bevorzugten Ausführungsform wird das Magnesiumpyrophosphat durch Vereinigung wässriger Lösungen von Natriumpyrophosphat (Na₄P₂O₇) und Magnesiumsulfat (MgSO₄·7H₂O) hergestellt.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Üblicherweise werden die kolloidalen Kieselsäuredispersionen durch Alkali stabilisiert, z.B. durch Zugabe von Natronlauge oder Ammoniak. Es gibt aber auch salzarme oder entsalzte Dispersionen, die im sauren pH-Bereich, etwa zwischen pH 2 und 5 stabil ("lagerstabil") sind. Setzt man alkalisch stabilisierte Dispersionen als Pickering-System ein, so ist es vorteilhaft, den pH-Wert der Mischung zur Herstellung der Öl-in-Wasser Emulsion mit einer Säure auf pH 2 bis 7 bevorzugt pH 2 bis 6, insbesondere pH 2 bis 5 einzustellen. Bevorzugte Säuren zur Einstellung sind Mineralsäuren wie Salpetersäure, Salzsäure, Phosphorsäure und Schwefelsäure sowie organische Säuren wie Zitronensäure, Ameisensäure und Amidosulfonsäure. Bevorzugt stellt man die Öl-in-Wasser-Emulsion bei einem pH-Wert im Bereich von 2 bis 6 her, der mit Zitronensäure, Ameisensäure, Salzsäure, Salpetersäure, Phosphorsäure, Schwefelsäure und/oder Amidosulfonsäure eingestellt wurde. Besonders für die Verwendung der Mikrokapseln in Gipsprodukten haben sich Mineralsäuren, insbesondere einwertige Mineralsäuren wie Salpetersäure als vorteilhaft erwiesen.

Die anorganischen festen Teilchen werden in der Regel in Mengen von 0,5 bis 15 Gew.-%, bezogen auf die Wasserphase, eingesetzt.

Besonders bevorzugt setzt man anorganisch feste Teilchen einer mittleren Größe von 45 bis 1000 nm gegebenenfalls in Mischung mit organischen Schutzkolloiden ein. Die Gesamtmenge an Schutzkolloid und anorganischen festen Teilchen einer mittleren Größe von 45 bis 1000 nm beträgt 0,5 bis 15 Gew.-% bezogen auf die Wasserphase.

Man unterscheidet bei organischen Schutzkolloiden zwischen neutralen und anionischen Schutzkolloiden, die einzeln oder zusammen eingesetzt werden können.

Neutrale Schutzkolloide sind Cellulosederivate wie Hydroxyethylcellulose, Carboxymethylcellulose und Methylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, der Styrolsulfonsäure sowie der Vinylsulfonsäure, Naphthalinsulfonsäure und Naphthalinsulfonsäure-Formaldehyd-Kondensate, Polyacrylsäuren und Phenolsulfonsäure-Formaldehyd-Kondensate.

Die neutralen Schutzkolloide werden in der Regel in Mengen von 0,001 bis 5 Gew.-% bezogen auf die Wasserphase der Emulsion eingesetzt, vorzugsweise 0,01 bis 2 Gew.-%.

Die anionischen Schutzkolloide werden in der Regel in Mengen von 0,01 bis 5 Gew.-% eingesetzt, bezogen auf die Wasserphase der Emulsion.

Als organische Schutzkolloide werden bevorzugt neutrale Schutzkolloide in Kombination mit den anorganischen festen Teilchen eingesetzt. Besonders bevorzugtes neutrales Schutzkolloid ist Methylcellulose.

Bevorzugt verwendet man 1 bis 10 Gew.-%, insbesondere 2 bis 8 Gew.-% anorganische feste Teilchen und 0,01 bis 2 Gew.-%, insbesondere 0,01 bis 1 Gew.-% neutrale Schutzkolloide, jeweils bezogen auf die Wasserphase der Emulsion.

Die auf diese Weise erhaltenen Mikrokapseln zeigen vorteilhafte Eigenschaften beim Einarbeiten in Gipsbauprodukte.

Die disperse Phase enthält die Monomere, die lipophile Substanz und den Radikalstarter. Der Anteil der dispersen Phase in der Öl-in-Wasser-Emulsion liegt vorzugsweise bei 20 bis 60 Gew.-%. Die Kapselwand wird durch radikalische Polymerisation der obengenannten Monomermischung hergestellt. Bevorzugt setzt sich die Monomermischung aus 30 bis 95 Gew.-% Monomere I, 5 bis 60 Gew.-%, insbesondere 10 bis 50 Gew.-% Monomere II und 0 bis 40 Gew.-%, vorzugsweise 0 bis 30 Gew.-% Monomere III zusammen, wobei die Gesamtmenge aller Monomere 100 Gew.-% ergibt.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butylund tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen.

Unter bi- oder polyfunktionellen Monomeren versteht man Verbindungen, die wenigstens 2 nichtkonjugierte ethylenische Doppelbindungen haben.

Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Styrol, α-Methylstyrol, β-Methylstyrol, Butadien, Isopren, Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Als lipophile Substanzen kommen in Wasser nur begrenzt lösliche Stoffe in Betracht. Die Löslichkeit in Wasser sollte vorzugsweise 5 Gew.-% nicht übersteigen. Beispielhaft seien genannt Alkylnaphthaline, partiell hydrierte Terphenyle, aromatische Kohlenwasserstoffe wie Xylol, Toluol, Dodecylbenzol, aliphatische Kohlenwasserstoffe, wie Benzin und Mineralöl, Chlorparaffine, Fluorkohlenwasserstoffe, natürliche Öle wie Erdnussöl, Sojaöl, außerdem Klebstoffe, Aromastoffe und Parfumöle. Diese Flüssigkeiten können Wirkstoffe wie Pflanzenschutzmittel oder Pharmaka, Farbstoffe oder Farbbildner gelöst oder suspendiert enthalten.

Besonders bevorzugt werden Mikrokapseln mit lipophilen Substanzen, die ihren fest/flüssig Phasenübergang im Temperaturbereich von -20 bis 120°C haben, sogenannten Latentwärmespeichermaterialien.

Als geeignete lipophile Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Aus anwendungstechnischen Gründen mag es vorteilhaft sein, der lipophilen Substanz lösliche Verbindungen zuzugeben, um so Gefrierpunktserniedrigungen zu vermeiden. Solche Verbindungen haben einen 20 bis 120° höheren Schmelzpunkt als die lipophile Substanz, wie in der US-A 4 797 160 beschrieben. Beispielhaft seien Fettsäuren, Fettalkohole, Fettamide oder aliphatische Kohlenwasserstoffverbindungen genannt.

Gleiches gilt für Flammschutzmittel wie die obengenannten halogenierten Kohlenwasserstoffe, Decabromdiphenyloxid, Octabromdiphenyloxid, Antimonoxid oder in der US-A 4 797 160 beschriebene Flammschutzadditive, die ebenfalls aus anwendungstechnischen Gründen zugesetzt werden können.

Je nach Temperaturbereich, in dem die Wärmespeicher gewünscht sind, werden die lipophilen Substanzen gewählt. Beispielsweise verwendet man für Wärmespeicher in Baustoffen in Europa bevorzugt lipophile Substanzen, deren fest/flüssig-Phasenübergang im Temperaturbereich von 0 bis 60°C liegt. So wählt man in der Regel für Außenanwendungen Einzelstoffe oder Mischungen mit Umwandlungstemperaturen von 0 bis 25°C und für Innenraumanwendungen von 15 bis 30°C. Bei Solaranwendungen in Verbindung mit Baustoffen als Speichermedium oder zur Überhitzungsvermeidung von transparenter Wärmedämmung, wie in der EP-A 333 145 beschrieben, sind vor allem Umwandlungstemperaturen von 30 bis 60°C geeignet. Vorteilhaft ist beispielsweise die Verwendung von Alkangemischen, wie sie als technisches Destillat anfallen und als solches handelsüblich sind.

Das Gewichtsverhältnis Monomere/lipophile Substanz ist ≤ 1, bevorzugt ≤ 0,5, insbesondere ≤ 0,35.

Eine stabile Öl-in-Wasser-Emulsion kann sowohl durch Emulgieren der lipophilen Substanz in Wasser und anschließende Zugabe der Monomere als auch durch Emulgieren der Lösung der Monomere in der lipophilen Substanz in Wasser hergestellt werden. Gegebenenfalls ist die lipophile Substanz, je nach ihrer Phasenübergangstemperatur, geschmolzen zuzudosieren. Allgemeine Bedingungen und Geräte zur Herstellung einer Emulsion sind dem Fachmann bekannt.

Zur großtechnischen Herstellung von Öl-in-Wasser-Emulsionen, insbesondere von Latentwärmespeichermaterialien empfiehlt es sich, wie in der älteren deutschen Anmeldung 101 560 17.6 beschrieben, die Mischung aus Öl- und Wasserphase mehrfach durch ein außerhalb des Vorrats-/Polymerisationsgefäßes liegendes Scherfeld zu führen, bis die gewünschte Tröpfchengröße erreicht wurde. Die in die Öl-in-Wasser-Emulsion eingetragene Scherenergie beträgt 250 bis 25 000 Watt • h/m³ Ansatzgröße abzüglich benötigter Pumpenergie.

Geeignete Vorrichtungen zur Erzeugung eines Scherfeldes sind nach dem Rotor-Stator-Prinzip arbeitende Zerkleinerungsmaschine wie Zahnkranzdispergiermaschinen, Kolloid- und Korundscheibenmühlen sowie Hochdruck- und Ultraschallhomogenisatoren. Zur Regulierung der Tröpfchengröße kann es vorteilhaft sein, zusätzlich Pumpen und/oder Drosseln im Kreislauf der Emulsion zu schalten.

Nach Herstellung der stabilen Öl-in-Wasser Emulsion der gewünschten mittleren Tröpfchengröße von 0,5 bis 100 µm, bevorzugt 1 bis 80 µm, insbesondere 1 bis 50 µm, ganz besonders bevorzugt 1 bis 30 µm wird die Polymerisation durch Erwärmen ausgelöst. Falls nicht bereits während des Emulgiervorganges geschehen, wird der Radikalstarter vor der Polymerisation zugesetzt.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden.

Je nach Aggregatzustand des Radikalstarters und seinem Löslichkeitsverhalten kann er als solcher, bevorzugt jedoch als Lösung, Emulsion (flüssig in flüssig) oder Suspension (fest in flüssig) zugeführt werden, wodurch sich insbesondere kleine Stoffmengen Radikalstarter präziser dosieren lassen.

Als bevorzugte Radikalstarter sind tert.-Butylperoxyneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

In der Regel führt man die Polymerisation bei 20 bis 100°C, vorzugsweise bei 40 bis 80°C durch. Abhängig von der gewünschten lipophilen Substanz ist die Öl-in-Wasser-Emulsion bei einer Temperatur zu bilden, bei der das Kernmaterial flüssig/ölig ist. Entsprechend muß ein Radikalstarter gewählt werden, dessen Zerfallstemperatur oberhalb dieser Temperatur und die Polymerisation ebenfalls 2 bis 50°C oberhalb dieser Temperatur durchgeführt werden, so dass man gegebenenfalls Radikalstarter wählt, deren Zerfallstemperatur oberhalb des Schmelzpunkts der lipophilen Substanz liegt.

Eine gängige Verfahrensvariante für lipophile Substanzen mit einem Schmelzpunkt bis etwa 60°C ist eine Reaktionstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie t-Butylperpivalat.

Nach einer weiteren Verfahrensvariante für lipophile Substanzen mit einem Schmelzpunkt oberhalb 60°C wählt man ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z.B. bei einer Polymerisationstemperatur oberhalb 100°C, arbeiten, also etwa im Bereich von 0,5 bis 5 bar.

Die Reaktionszeiten der Polymerisation betragen normalerweise 1 bis 10 Stunden, meistens 2 bis 5 Stunden.

Bevorzugt werden Mikrokapseln durch schrittweise Erwärmung der Öl-in-Wasser-Emulsion gebildet. Dabei ist unter schrittweise zu verstehen, daß durch Temperaturerhöhung die Reaktion durch Zerfall des Radikalstarters ausgelöst wird und weitere Erwärmung, die kontinuierlich oder periodisch erfolgen kann, die Polymerisation gesteuert wird. Die Geschwindigkeit der Polymerisation kann dabei durch Wahl der Temperatur und der Menge an Radikalstarter gesteuert werden. Dies geschieht bevorzugt mit Hilfe eines Programms mit ansteigender Temperatur. Die gesamte Polymerisationszeit kann zu diesem Zweck in zwei oder mehr Perioden unterteilt werden. Die erste Polymerisationsperiode ist durch einen langsamen Zerfall des Polymerisationsinitiators gekennzeichnet. In der zweiten Polymerisationsperiode und gegebenenfalls weiteren Polymerisationsperioden wird die Temperatur der Reaktionsmischung erhöht, um den Zerfall der Polymerisationsinitiatoren zu beschleunigen. Die Temperatur kann in einem Schritt oder in mehreren Schritten oder kontinuierlich in linearer oder nichtlinearer Weise erhöht werden. Die Temperaturdifferenz zwischen dem Beginn und dem Ende der Polymerisation kann bis zu 50 °C betragen. Im Allgemeinen beträgt diese Differenz 3 bis 40 °C, vorzugsweise 3 bis 30°C.

Nach Erreichen der Endtemperatur setzt man die Polymerisation zweckmäßigerweise noch etwa für eine Zeit von bis zu 2 Stunden fort, um Restmonomergehalte abzusenken.

Im Anschluß an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden.

Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Als Oxidationsmittel zur redoxinitiierten Nachpolymerisation eignen sich insbesondere Wasserstoffperoxid, tert.-Butylhydroperoxid, Cumolhydroperoxid oder Alkaliperoxidsulfate. Geeignete Reduktionsmittel sind Natriumdisulfit, Natriumhydrogensulfit, Natriumdithionit, Natriumhydroxylethansulfinat, Formamidinsulfinsäure, Acetonbisulfit (= Natriumhydrogensulfit-Additionsprodukt an Aceton), Ascorbinsäure bzw. reduzierend wirkende Zuckerverbindungen, oder wasserlösliche Mercaptane, wie Mercaptoethanol. Die Nachpolymerisation mit dem Redoxinitiatorsystem wird im Temperaturbereich von 10 bis 100°C, vorzugsweise bei 20 bis 90°C durchgeführt. Die Redoxpartner können der Mikrokapseldispersion unabhängig voneinander vollständig, portionsweise bzw. kontinuierlich über einen Zeitraum von 10 Minuten bis 4 Stunden zugegeben werden. Zur Verbesserung der Nachpolymerisationswirkung der Redoxinitiatorsystems können der Mikrokapseldispersion auch lösliche Salze von Metallen wechselnder Wertigkeit, wie Eisen-, Kupfer- oder Vanadiumsalze, zugegeben werden. Häufig werden auch Komplexbildner zugegeben, die die Metallsalze unter den Reaktionsbedingungen in Lösung halten.

Nach Beendigung der Polymerisation liegen die Mikrokapseln in Wasser dispergiert vor. Diese Dispersion kann entweder als solche weiterverarbeitet werden, oder man kann die Mikrokapseln von der wässrigen Phase abtrennen und sprühtrocknen, wie in der WO-A-9 924 525 beschrieben.

Die Sprühtrocknung der Mikrokapseldispersion kann in üblicher Weise erfolgen. Im allgemeinen wird so vorgegangen, dass die Eingangstemperatur des Warmluftstroms im Bereich von 100 bis 200°C, vorzugsweise 120 bis 160°C, und die Ausgangstemperatur des Warmluftstroms im Bereich von 30 bis 90°C, vorzugsweise 60 bis 80°C, liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wässrige Polymerisatdispersion und der Warmluftstrom werden vorzugsweise parallel geführt.

Die erfindungsgemäßen Mikrokapseln haben die im Emulgierschritt eingestellten mittleren Teilchengrößen. Sie zeichnen sich durch eine enge Teilchengrößenverteilung aus. Die erfindungsgemäßen Mikrokapseln haben einen geringen Anteil von Kapseln mit einem Durchmesser ≤ 4 µm bezogen auf die Gesamtverteilung bei gleichem mittleren Durchmesser als Mikrokapseln des Standes der Technik. Ferner wurde gefunden das die erfindungsgemäßen Mikrokapseln gute Schmelzwärmen zeigen.

Die erfindungsgemäßen Mikrokapseln sind je nach lipophiler Substanz für Durchschreibepapiere, in der Kosmetik, zur Verkapselung von Parfümstoffen, Aromastoffen oder Klebstoffen oder im Pflanzenschutz geeignet. Besonders eignen sich die erfindungsgemäßen Mikrokapseln als Latentwärmespeichermaterialien. Die Anwendung solcher Latentwärmespeicher ist vielfältig. So lassen sie sich vorteilhaft in Textilien wie Textilgeweben, Textilbeschichtungen, Nonwovens (z.B. Vliesstoffe) usw. einarbeiten. Ein weiteres bereits Anwendungsfeld sind Bindebaustoffen mit mineralischen, silikatischen oder polymeren Bindemitteln. Man unterscheidet dabei zwischen Formkörpern und Beschichtungsmassen. So zeichnen sie sich durch ihre Hydrolysestabilität gegenüber den wässrigen und oft alkalisch wässrigen Materialien aus.

Unter einem mineralischen Formkörper wird ein Formkörper verstanden, der aus einem Gemisch aus einem mineralischen Bindemittel, Wasser, Zuschlägen sowie gegebenenfalls Hilfsmitteln nach Formgebung dadurch entsteht, daß das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton, Lehm und/oder Zement, die durch Anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Glasoder Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepaßt sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z.B. aus der US-A 4 340 510, der GB-PS 15 05 558, der US-A 3 196 122, der US-A 3 043 790, der US-A 3 239 479, der DE-A 43 17 035, der DE-A 43 17 036, der JP-A 91/131 533 und anderen Schriften bekannt sind.

In besonderer Weise eignen sich die Mikrokapseln zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist. Bezüglich weiterer Details sei auf die DE-A 19 623 413 verwiesen.

In typischer Weise enthalten die Trockenzusammensetzungen mineralischer Bindebaustoffe, bezogen auf die Menge an mineralischem Bindemittel, 0,1 bis 20 Gew.-% Mikrokapseln. Die erfindungsgemäßen mineralischen Bindebaustoffe weisen gegenüber herkömmlichen Baustoffen ein sehr gutes Wärmespeichervermögen auf.

Besonders bevorzugt werden die Mikrokapseln in mineralischen Beschichtungsmassen wie Putz angewendet. Ein solcher Putz für den Innenbereich setzt sich üblicherweise aus Gips als Bindemittel zusammen. Je größer der Anteil Mikrokapseln in der Beschichtungsmasse ist, desto größer ist natürlich die wärmespeichernde Wirkung. In der Regel beträgt das Gewichtsverhältnis Gips/Mikrokapsel von 95:5 bis 70:30. Höhere Mikrokapselanteile sind natürlich möglich.

Beschichtungen für den Außenbereich wie Außenfassaden oder Feuchträume können Zement (zementöse Putze), Kalk oder Wasserglas (mineralische oder Silikat-Putze) oder Kunststoffdispersionen (Kunstharzputze) als Bindemittel zusammen mit Füllstoffen und gegebenenfalls Pigmenten zur Farbgebung enthalten. Der Anteil der Mikrokapseln am Gesamtfeststoff entspricht den Gewichtsverhältnissen für Gipsputze.

Der ausgehärtete Gipsputz zeichnet sich zusätzlich zur besseren Wärmespeicherung durch geringere Tendenz zur Wasseraufnahme und eine höhere Elastizität aus.

Ferner eignen sich die Mikrokapseln als Zusatz in polymeren Formkörpern oder polymeren Beschichtungsmassen. Hierunter sind thermoplastische und duroplastische Kunststoffe zu verstehen, bei deren Verarbeitung die Mikrokapseln nicht zerstört werden. Beispiele sind Epoxy-, Harnstoff-, Melamin-, Polyurethan und Silikonharze und auch Lacke sowohl auf Lösungsmittelbasis, High-Solid-Basis, Pulverlack oder Wasserbasislack und Dispersionsfilme. Geeignet sind die Mikrokapseln auch zur Einarbeitung in Kunststoffschäume und Fasern. Beispiele, für Schäume sind Polyurethanschaum, Polystyrolschaum, Latexschaum und Melaminharzschaum.

Vorteilhafte Effekte können ferner erzielt werden, wenn die Mikrokapseln in mineralischen Formkörpern verarbeitet werden, die geschäumt werden.

Bevorzugt werden die erfindungsgemäßen Mikrokapseln in mineralischen Formkörpern, mineralischen Beschichtungsmassen und Gipskartonplatten eingesetzt.

Die Mikrokapseln können als Pulver oder als Dispersion in die Gipskartonplatten eingearbeitet werden. Dabei werden bevorzugt 5 bis 40 Gew.-%, insbesondere 20 bis 35 Gew.-%, Mikrokapseln bezogen auf das Gesamtgewicht der Gipskartonplatte (Trockensubstanz) eingearbeitet. Die Herstellung von Gipskartonplatten ist allgemein bekannt.

Gipskartonplatten bestehen in der Regel aus einem Gipskern mit beidseitig angebrachten Kartonblättern. Sie werden üblicherweise in der Art hergestellt, dass wässriger Gipsbrei diskontinuierlich oder kontinuierlich zwischen zwei Kartonblätter auf Cellulosebasis gebracht wird, wobei Platten geformt werden. Der Gipsbrei wird wie allgemein bekannt durch kontinuierliche Zugabe und ständigem Mischen von β-Hemihydratcalciumsulfat in Wasser mit Additiven hergestellt. Die Mikrokapseln können sowohl zusammen mit dem Calciumsulfat dosiert werden, wie auch bereits als wässrige Dispersion vorliegen. Der so erhaltene Gipsbrei wird auf die Kartonblätter aufgetragen, beispielsweise gesprüht und mit Karton abgedeckt.

Während der beginnenden Aushärtung werden die Kartonplatten in einer Presse zu Streifen mit beispielsweise 1,2 - 1,25 m Breite und 9,25, 12,5, 15,0, 18,0 oder 25 mm Dicke geformt. Diese Streifen härten innerhalb weniger Minuten aus und werden in Platten geschnitten. In diesem Stadium enthalten die Platten in der Regel noch ein Drittel ihres Gewichtes als freies Wasser. Um das Restwasser zu entfernen werden die Platten einer Wärmebehandlung bei Temperaturen von etwa 250°C unterworfen. Die so erhaltenen Gipskartonplatten haben eine Dichte von 750 - 950 kg/m³.

Für Gipskartonplatten wird üblicherweise Karton mit einem Gewicht von ca. 300 g/m² eingesetzt. Kartons dieser Art werden meist in mehreren Schichten hergestellt, wobei die letzte Schicht die Deckschicht des Kartons darstellt und ein Gewicht von 10 bis 100 g/m², vorzugsweise von 30 bis 70 g/m² hat.

Anstelle von Karton aus Cellulosebasis können auch alternative, faserartige Gebilde als beidseitige Abdeckungen der erfindungsgemäßen Gipskartonplatten verwendet werden. Alternative Materialien sind Polymerfasern aus z.B. Polypropylen, Polyester, Polyamid, Polyacrylaten, Polyacrylnitril und dergleichen. Auch Glasfasern sind geeignet. Die alternativen Materialien können als Gewebe und als sogenannte "nonwovens", also als vliesartige Gebilde eingesetzt werden.

Derartige Gipskartonplatten sind beispielsweise aus der US 4,810,569, US 4,195,110 und US 4,394,411 bekannt.

Eine erhöhte Haftfestigkeit auf Untergründen wie Karton kann durch Zusatz natürlicher und/oder synthetischer Polymere erzielt werden. Geeignete wasserlösliche Polymere sind: Stärke und Stärkeether, höhermolekulare Methylcellulose und andere Cellulosederivate, Guar-Gummi-Derivate, thermoplastische Dispersionspulver und Flüssigdispersionen auf Basis Vinylacetat, Ethylen-Vinylacetat, Vinylpropionat, Styrol-Butadien, Styrolacrylat und Reinacrylat. Die zugegebene Menge der Polymere beträgt 0,1 bis 5 Gew.-% bezogen auf das Gesamttrockengewicht Gips und Latentwärmespeicher.

Es ist ferner vorteilhaft, Gipsmassen als weitere Additive Wasserretentionsmittel und/oder Verdicker hinzuzufügen. Beispiele sind Polyvinylalkohol, Cellulosederivate wie Hydroxyethylcellulose, Hydroxypropylcellulose, Carboxymethylcellulose, Polyacrylsäure und Copolymere mit Acrylsäure, wie z.B. Polyethylen-co-acrylsäure, Polymaleinsäure-co-acrylsäure, Polyisobutylenco-acrylsäure und acrylsäurereiche Polymerdispersionen mit Styrol oder Acrylsäureestern oder Vinylacetat, wie sie als Verdicker für z.B. die Papierveredelung eingesetzt werden. Üblicherweise werden die Wasserretentionsmittel und/oder Verdicker in Mengen von 0,05 bis 2 Gew.-% bezogen auf das Gesamttrockengewicht Gips und Latentwärmespeicher eingesetzt.

Bei den Prozentangaben in den Beispielen handelt es sich um Gewichtsprozent.

### Beispiel 1

### Wasserphase:

| | |
|---|---|
| 572 g | Wasser |
| 80 g | einer 50 %igen kolloidalen Dispersion von SiO₂ in Wasser bei pH 9,3 (mittlere Teilchengröße 108,6 nm, Z-Mittelwert nach Lichtstreuung) |
| 2,1 g | einer 2,5 %igen, wässrigen Natriumnitritlösung |
| 20 g | Methylcellulose, 1 %-ige wässrige Lösung (Viskosität 15000 mPas bei 2 % in Wasser) |

### Ölphase:

| | |
|---|---|
| 440 g | C₁₈-C₂₀-Alkan (techn. Destillat) |
| 77 g | Methylmethacrylat |
| 33 g | Butandioldiacrylat |
| 0,76 g | Ethylhexylthioglykolat |
| 1,35 g | t-Butylperpivalat |

Zulauf 1: 1,09 g t-Butylhydroperoxid, 70%ig in Wasser
Zulauf 2: 0,34 g Ascorbinsäure, 0,024 g NaOH, 56 g H₂O

Bei Raumtemperatur wurde die obige Wasserphase vorgelegt und mit 3 g 10%iger Salpetersäure auf pH 4 gestellt. Nach Zugabe der Ölphase wurde mit einem schnellaufenden Dissolverrührer bei 4200 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 4 Minuten auf 56°C aufgeheizt, innerhalb von weiteren 20 Minuten auf 58°C, innerhalb von weiteren 60 Minuten auf 71°C und innerhalb von weiteren 60 Minuten auf 85°C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 46,8 % und eine mittlere Teilchengröße D(4,3) = 9,5 µm (gemessen mit Fraunhoferbeugung, Volumenmittelwert).

Die Dispersion konnte in einem Laborsprühtrockner mit Zweistoffdüse und Zyklonabscheidung mit 130°C Eingangstemperatur des Heizgases und 70°C Ausgangstemperatur des Pulvers aus dem Sprühturm problemlos getrocknet werden. Mikrokapseldispersion und Pulver zeigten beim Aufheizen in der Differentialkalorimetrie bei einer Heizrate von 1 K/Minute einen Schmelzpunkt zwischen 26,5 und 29,5°C mit einer Umwandlungsenthalpie von 120 J/g Alkanmischung. Der Anteil an Kapseln ≤ 4 µm betrug 3 %.

### Beispiel 2 (nicht erfindungsgemäß)

Analog Beispiel 1 wurden Mikrokapseln hergestellt, mit dem Unterschied, dass 263 g einer 30 %igen kolloidalen Dispersion von SiO₂ in Wasser (pH 9,8, mittlere Teilchengröße 19 nm, Z-Mittelwert nach Lichtstreuung; Ludox® HS, Firma DuPont) und 10,1 g einer 20%igen wässrigen Lösung eines Polymers aus 59 % 2-Acrylamido-2-methylpropansulfonsäure-Na-Salz, 20 % Arcylsäure, 20 % Methylacrylat und 1 % Styrol (K-Wert 69) anstelle von Methylcellulose verwendet wurden. Die entstandenen Mikrokapseldispersion besaß einen Feststoffgehalt von 46,5 % und eine mittlere Teilchengröße D(4,3) = 9,1 µm. Der Anteil an Kapsel ≤ 4 µm betrug 30 %.

## Patentansprüche

1. Mikrokapseln umfassend eine oder mehrere lipophile Substanzen als Kernmaterial und ein Polymer als Kapselschale, die erhältlich sind durch radikalische Polymerisation einer Öl-in-Wasser-Emulsion enthaltend
- 30 bis 100 Gew.-%, bezogen auf das Gesamtgewicht der Monomeren, eines oder mehrerer C₁-C₂₄-Alkylester der Acryl- und/oder Methacrylsäure (Monomer I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III)
die lipophile Substanz und anorganische feste Teilchen einer mittleren Teilchengröße von 45 bis 1000 nm.

2. Mikrokapseln nach Anspruch 1, **dadurch gekennzeichnet, dass** die anorganischen festen Teilchen ausgewählt wurden aus der Gruppe umfassend hochdisperse Kieselsäuren, Magnesiumpyrophosphat und Tricalciumphosphat.

3. Mikrokapseln nach Anspruch 1 oder 2, **dadurch gekennzeichnet, dass** die anorganischen festen Teilchen eine mittlere Größe von 45 bis 500 nm haben.

4. Mikrokapseln nach den Ansprüchen 1 bis 3, **dadurch gekennzeichnet, dass** die Öl-in-Wasser-Emulsion zusätzlich neutrale Schutzkolloide enthält.

5. Mikrokapseln nach den Ansprüchen 1 bis 4, **dadurch gekennzeichnet, dass** das die Monomermischung aus
- 30 bis 95 Gew.-%, bezogen auf das Gesamtgewicht der Monomeren, eines oder mehrerer C₁-C₂₄-Alkylester der Acryl- und/oder Methacrylsäure (Monomer I),
- 5 bis 60 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III)
besteht.

6. Mikrokapseln nach den Ansprüchen 1 bis 5, **dadurch gekennzeichnet, dass** die lipophile Substanz ihren fest/flüssig Phasenübergang im Temperaturbereich von -20 bis 120°C hat.

7. Verfahren zur Herstellung von Mikrokapseln gemäß den Ansprüchen 1 bis 6, indem man eine Öl-in-Wasser-Emulsion enthaltend
- 30 bis 100 Gew.-%, bezogen auf das Gesamtgewicht der Monomeren, eines oder mehrerer C₁-C₂₄-Alkylester der Acryl- und/oder Methacrylsäure (Monomer I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III)
die lipophile Substanz und anorganische feste Teilchen einer mittleren Teilchengröße von 45 bis 1000 nm radikalisch polymerisiert und gegebenenfalls sprühtrocknet.

8. Verfahren nach Anspruch 7, **dadurch gekennzeichnet, dass** man die Öl-in-Wasser-Emulsion bei einem pH Wert im Bereich von 2 bis 6 herstellt, der mit Säuren aus der Gruppe Zitronensäure, Ameisensäure, Salzsäure, Salpetersäure, Phosphorsäure, Schwefelsäure und Amidosulfonsäure eingestellt wurde.

9. Verwendung von Mikrokapseln gemäß den Ansprüchen 1 bis 6, in Bindebaustoffen, Textilien oder Gipskartonplatten.

10. Gipskartonplatten enthalten 5 bis 40 Gew.-% Mikrokapseln gemäß den Ansprüchen 1 bis 6 bezogen auf das Gewicht der Gipskartonplatte.

## Claims

1. Microcapsules comprising one or more lipophilic substances as core material and a polymer as capsule shell, which are obtainable by free-radical polymerization of an oil-in-water emulsion comprising
- from 30 to 100% by weight, based on the total weight of the monomers, of one or more C₁-C₂₄-alkyl esters of acrylic and/or methacrylic acid (monomer I),
- from 0 to 80% by weight, based on the total weight of the monomers, of a bifunctional or polyfunctional monomer (monomers II) which is insoluble or sparingly soluble in water and
- from 0 to 40% by weight, based on the total weight of the monomers, of other monomers (monomers III),
the lipophilic substance and solid inorganic particles having a mean particle size of from 45 to 1000 nm.

2. The microcapsules according to claim 1, wherein the solid inorganic particles are selected from the group consisting of finely divided silicas, magnesium pyrophosphate and tricalcium phosphate.

3. The microcapsules according to claim 1 or 2, wherein the solid inorganic particles have a mean size of from 45 to 500 nm.

4. The microcapsules according to any of claims 1 to 3, wherein the oil-in-water emulsion further comprises uncharged protective colloids.

5. The microcapsules according to any of claims 1 to 4, wherein the monomer mixture consists of
- from 30 to 95% by weight, based on the total weight of the monomers, of one or more C₁-C₂₄-alkyl esters of acrylic and/or methacrylic acid (monomer I),
- from 5 to 60% by weight, based on the total weight of the monomers, of a bifunctional or polyfunctional monomer (monomers II) which is insoluble or sparingly soluble in water and
- from 0 to 40% by weight, based on the total weight of the monomers, of other monomers (monomers III).

6. The microcapsules according to any of claims 1 to 5, wherein the lipophilic substance has its solid/liquid phase transition in the temperature range from -20 to 120°C.

7. A process for producing microcapsules according to any of claims 1 to 6 by polymerizing an oil-in-water emulsion comprising
- from 30 to 100% by weight, based on the total weight of the monomers, of one or more C₁-C₂₄-alkyl esters of acrylic and/or methacrylic acid (monomer I),
- from 0 to 80% by weight, based on the total weight of the monomers, of a bifunctional or polyfunctional monomer (monomer II) which is insoluble or sparingly soluble in water and
- from 0 to 40% by weight, based on the total weight of the monomers, of other monomers (monomers III),
the lipophilic substance and solid inorganic particles having a mean particle size of from 45 to 1000 nm by a free-radical mechanism and, if appropriate, spray drying the polymerized emulsion.

8. The process according to claim 7, wherein the oil-in-water emulsion is produced at a pH in the range from 2 to 6 which has been set by means of acids selected from the group consisting of citric acid, formic acid, hydrochloric acid, nitric acid, phosphoric acid, sulfuric acid and amidosulfonic acid.

9. The use of microcapsules according to any of claims 1 to 6 in binding building materials, textiles or gypsum plasterboard.

10. A gypsum plasterboard comprising from 5 to 40% by weight of microcapsules according to any of claims 1 to 6, based on the weight of the gypsum plasterboard.

## Revendications

1. Microcapsules comprenant une ou plusieurs substances lipophiles comme matériau central et un polymère comme enveloppe de capsule que l'on peut obtenir par polymérisation radicalaire d'une émulsion huile dans l'eau contenant :
- 30 à 100% en poids, par rapport au poids total des monomères, d'un ou de plusieurs esters d'alkyle en C₁-C₂₄ de l'acide acrylique et/ou de l'acide méthacrylique (monomère I),
- 0 à 80% en poids, par rapport au poids total des monomères, d'un monomère bifonctionnel ou polyfonctionnel (monomères II) qui n'est pas ou qui est difficilement hydrosoluble et
- 0 à 40% en poids, par rapport au poids total des monomères, d'autres monomères (monomères III),
la substance lipophile et des particules solides inorganiques d'une taille particulaire moyenne de 45 à 1000 nm.

2. Microcapsules selon la revendication 1, **caractérisées en ce que** les particules solides inorganiques sont choisies dans le groupe comprenant des acides siliciques hautement dispersés, le pyrophosphate de magnésium et le phosphate tricalcique.

3. Microcapsules selon les revendications 1 ou 2, **caractérisées en ce que** les particules solides inorganiques ont une taille moyenne de 45 à 500 nm.

4. Microcapsules selon les revendications 1 à 3, **caractérisées en ce que** l'émulsion huile dans l'eau contient en plus des colloïdes protecteurs neutres.

5. Microcapsules selon les revendications 1 à 4, **caractérisées en ce que** le mélange de monomères est constitué de :
- 30 à 95% en poids, par rapport au poids total des monomères, d'un ou de plusieurs esters d'alkyle en C₁-C₂₄ de l'acide acrylique et/ou de l'acide méthacrylique (monomère I),
- 5 à 60% en poids, par rapport au poids total des monomères, d'un monomère bifonctionnel ou polyfonctionnel (monomères II) qui n'est pas ou qui est difficilement hydrosoluble et
- 0 à 40% en poids, par rapport au poids total des monomères, d'autres monomères (monomères III).

6. Microcapsules selon les revendications 1 à 5, **caractérisées en ce que** la substance lipophile a sa transition de phase solide/liquide dans la plage de température de -20 à 120°C.

7. Procédé de fabrication de microcapsules selon les revendications 1 à 6, dans lequel on polymérise par voie radicalaire une émulsion huile dans l'eau, contenant :
- 30 à 100% en poids, par rapport au poids total des monomères, d'un ou de plusieurs esters d'alkyle en C₁-C₂₄ de l'acide acrylique et/ou de l'acide méthacrylique (monomère I),
- 0 à 80% en poids, par rapport au poids total des monomères, d'un monomère bifonctionnel ou polyfonctionnel (monomères II) qui n'est pas ou qui est difficilement hydrosoluble et
- 0 à 40% en poids, par rapport au poids total des monomères, d'autres monomères (monomères III),
la substance lipophile et des particules solides inorganiques d'une taille particulaire moyenne de 45 à 1000 nm, et éventuellement on la sèche par pulvérisation.

8. Procédé selon la revendication 7, **caractérisé en ce que** l'on fabrique l'émulsion huile dans l'eau à une valeur de pH située dans la plage de 2 à 6, qui a été ajustée avec des acides du groupe constitué de l'acide citrique, l'acide formique, l'acide chlorhydrique, l'acide nitrique, l'acide phosphorique, l'acide sulfurique et l'acide amidosulfonique.

9. Utilisation de microcapsules selon les revendications 1 à 6 dans des liants de construction, des textiles ou des plaques de placoplâtre.

10. Plaques de placoplâtre contenant 5 à 40% en poids de microcapsules selon les revendications 1 à 6, par rapport au poids de la plaque de placoplâtre.
